# EUROPEAN PATENT SPECIFICATION

(11) **EP 0 961 705 B1**
(45) Date of publication and mention of the grant of the patent: **10.04.2002**
(21) Application number: 98902488.0
(22) Date of filing: 13.01.1998
(51) Int. Cl.: B60K 1/00

(54) **LOW FLOOR DRIVE UNIT ASSEMBLY FOR AN ELECTRICALLY DRIVEN VEHICLE**
ANTRIEBSEINHEIT FÜR ELEKTRISCH ANGETRIEBENES NIEDERFLURFAHRZEUG
ENSEMBLE UNITE DE TRANSMISSION A FAIBLE GARDE AU SOL POUR VEHICULE ELECTRIQUE

(30) Priority: 18.02.1997 US 801531; 18.02.1997 US 801532; 18.02.1997 US 801536
(43) Date of publication of application: 08.12.1999
(60) Divisional application: 01102767.9
(73) Proprietor: Meritor Heavy Vehicle Systems, LLC, Troy, MI 48084 (US)
(72) Inventor: RUPPERT, Malcolm, F., Cotteyville, Kansas 67337 (US); SULLIVAN, William, Carl, Newark, OH 43055 (US); HOUSE, Dean, Mark, Pataskala, OH 43062 (US); YAMADA, Silvio, Masaaki, Gahanna, OH 43230 (US)
(74) Representative: Sties, Jochen, Dipl.-Ing.
(86) International application number: US9800514
(87) International publication number: WO9835848

(56) References cited:
- CH-A- 679 027
- DE-C- 4 112 624
- GB-A- 502 313
- GB-A- 1 303 615
- US-A- 1 543 044
- US-A- 2 589 863
- US-A- 3 812 928
- US-A- 3 930 551
- US-A- 4 270 622
- US-A- 4 330 045

## Description

### BACKGROUND OF THE INVENTION

This invention relates to a transmission assembly according to the preamble of claim 1 and to a transmission according to the preamble of claim 7.

Mass transit vehicles, such as a bus or trolley car, typically have seats aligned at the lateral sides of the vehicle, with a central aisle extending along the vehicle. The seats are typically at a higher vertical location than the aisle, and thus cover the wheels. It would be desirable to have the aisle positioned relatively low to the ground. This would provide increased passenger space within the body of the vehicle, and may allow the designer to reduce the overall height of the mass transit vehicle. Other advantages to having a lower floor position include improved handicapped access and greater ease in the loading and unloading of passengers.

Mass transit vehicles typically have several axles which support and drive or steer the vehicle. If the axle is a driving axle, then electric motors can be used to generate torque to drive the wheels. In a typical configuration, a centrally located electric motor drives two opposed wheels at the sides of the vehicle by way of a conventional axle. Usually, transmissions or drive shafts extend from the central motor to the axle.

In the prior art, there are relatively large motor, transmission, or axle elements directly below the center of the vehicle. The aisle is typically in the center of the vehicle and normally goes over the axle, thus requiring the floor of the aisle to be relatively high. One known bus moves the floor up by steps over the axle. It is undesirable, however, to have passengers climb steps to reach the aisle and seating areas.

An example of a prior art drive as mentioned above can be found in US-A-4,270,622.

A transmission assembly and a transmission as defined in the preamble of claims 1 and 7 can be found in US-A-1,543,044 which discloses an electrically driven motor vehicle using a single motor for each wheel to be driven.

GB-A-1 303 615 discloses an electrically propelled car having a single drive axle comprising two drive shafts connected to each other via a differential gear. The driven gear of the differential meshes with a pinion connected to an output shaft of a reduction gear. The input shaft of the reduction gear is connected to an electric motor and extends through the gear box of the differential gear so that the electric motor and the pinion are arranged opposite each other with respect to the drive axle.

In order to minimize the longitudinal distance through which the motor and its associated gearing extends, a transmission assembly according to the preamble of claim 1 comprises the features of the characterizing portion of claim 1, and a transmission according to the preamble of claim 7 comprises the features of the characterizing portion of claim 7.

This invention improves packaging and increases passenger compartment size by moving the electric motors to the sides of the vehicle. This allows the interior vehicle floor to be lowered between the motors resulting in improved utilization of the passenger compartment. Also, the flexibility of mounting the electric motors at various angles with respect to the axis of rotation of the first and second driving axles results in flexible packaging designs for other vehicle components. Also, by mounting the electric motors to existing structures on the axle, a weight savings occurs because additional brackets and mounting supports are not required. Finally, by mounting the bevel gear and motor on opposing sides of the axis of rotation, the longitudinal distance through which the motor and its associated gearing extends is minimized so that the floor must only extend upwardly to surround the wheel and the motor for a minimal longitudinal distance.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 is a cross sectional view of a vehicle incorporating the subject invention;
Figure 2A is a cross sectional view taken along line 2-2 of Figure 1, showing a first electric motor arrangement;
Figure 2B is a view like Figure 2A, but showing an alternative electric motor arrangement;
Figure 3 is a fragmentary view from the inside of the left wheel hub as shown in Figure 2, partially broken away and in cross section, and showing a first embodiment of an electric motor arrangement;
Figure 4 is a cross section view from the front of the left wheel as shown in Figure 3, and showing the first embodiment of an electric motor mounting arrangement;
Figure 5 is a view like Figure 3 but showing an alternative electric motor mounting arrangement;
Figure 6 is a view like Figure 4 but showing the alternative electric motor mounting arrangement;
Figure 7 is a view like Figure 3 but showing an additional electric motor;
Figure 8 is a cross sectional view of a gear box showing an alternative embodiment incorporating a planetary gear set;
Figure 9 is similar to Figure 2A but shows the method of mounting the electric motors to suspension beams;
Figure 10A is a fragmentary view from the inside of the left wheel hub as shown in Figure 9, partially broken away and in cross section, and showing a first embodiment of a flexible coupling;
Figure 10B is a cross-sectional view through the coupling of Figure 10A;
Figure 11 is a view similar to Figure 10A but showing an alternative flexible coupling;
Figure 12 shows an alternative coupling; and
Figure 13 shows details of the mounting of the coupling shown in Figure 12.

### DETAILED DESCRIPTION OF a PREFERRED EMBODIMENT

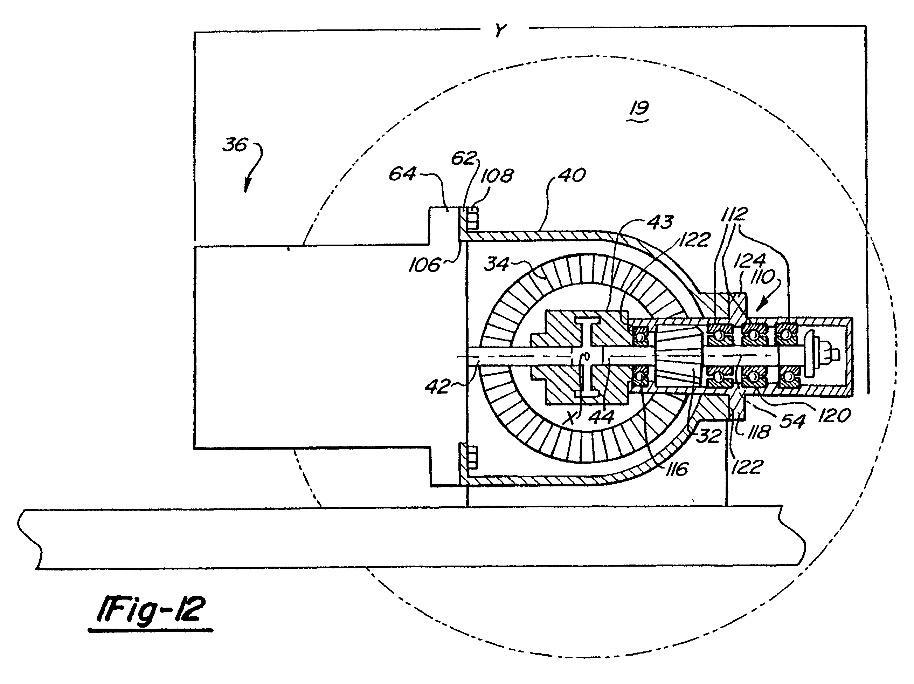

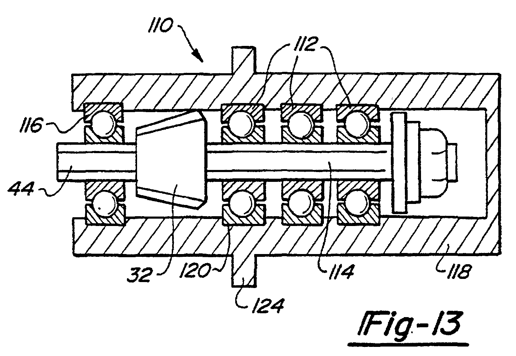

In the drawings, only figures 12 and 13 show the particular construction covered by the claims. the remaining figures are for illustration only.

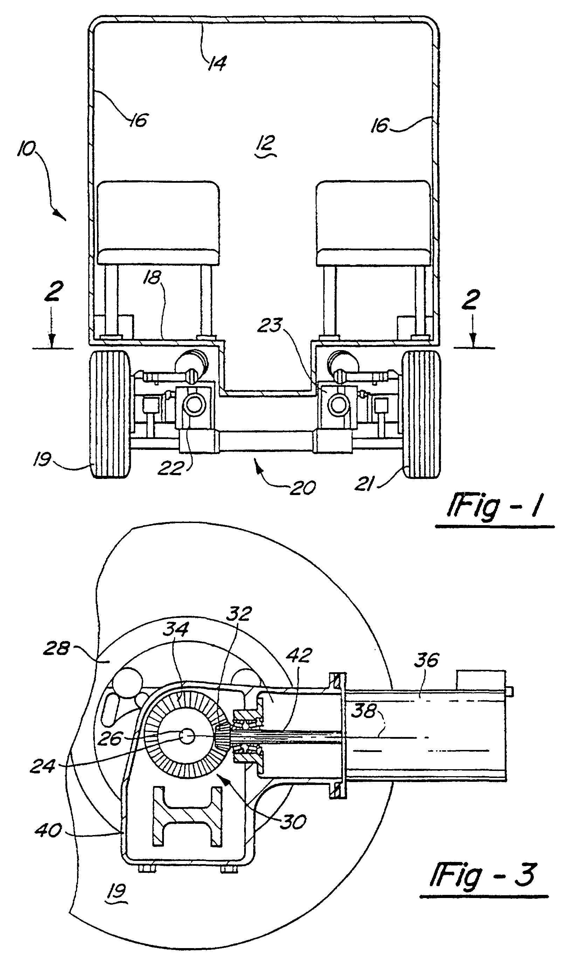

Referring to the Figures, wherein like numerals indicate like or corresponding parts throughout the several views, an automotive vehicle is shown generally at 10. As shown in Figure 1, automotive vehicle 10 includes a passenger compartment 12 defined by a roof 14, two side walls 16, and a vehicle floor 18. A pair of wheels 19, 21 are driven by an automotive vehicle drive unit assembly, generally shown at 20, which has a first unit 22 and a second unit 23. It should be understood that vehicle 10 is typically provided with a pair of drive units and several pairs of wheels.

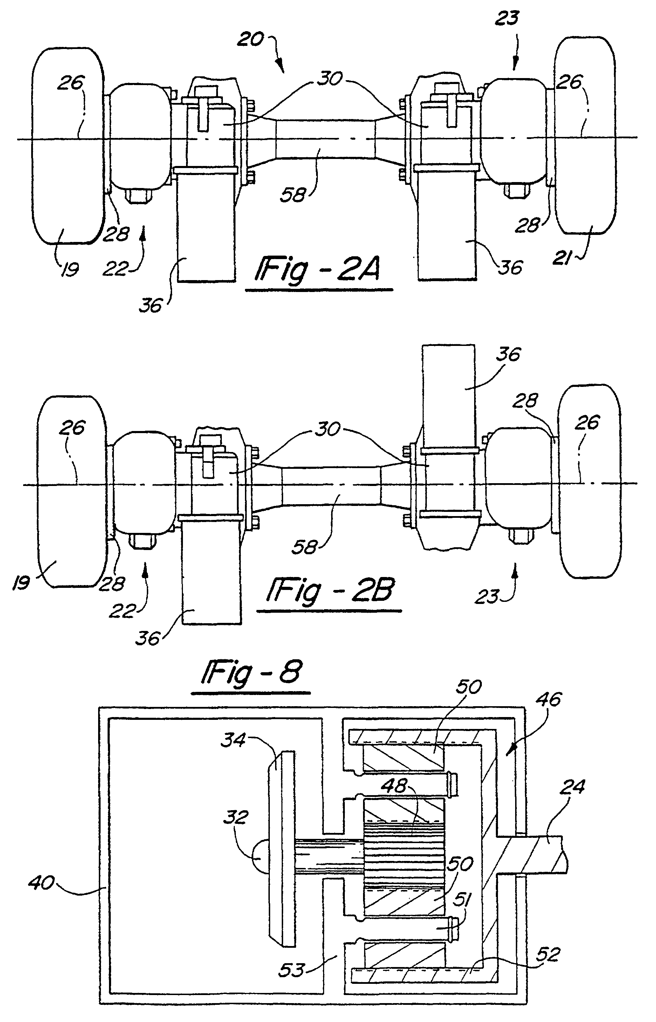

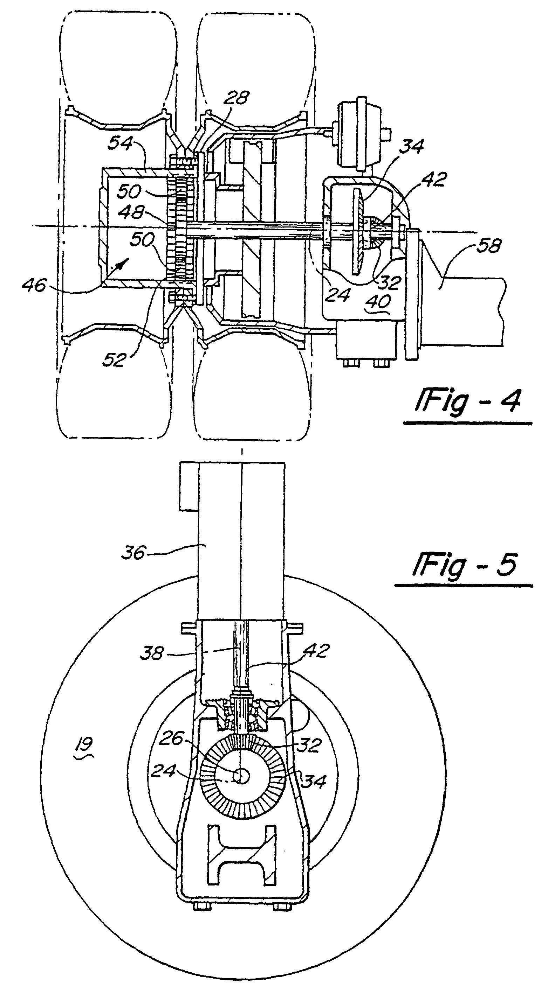

As shown in Figure 2A, the first 22 and second 23 units define an axis of rotation 26. A first driving axle shaft 24, shown in Figure 3, drives a first wheel hub 28 which revolves about the axis 26 of rotation for the first driving axle shaft 24.

A first gear set 30, located adjacent to the first wheel 19, is comprised of a pinion gear 32 and a ring gear 34 which together drive the first wheel hub 28. A first electric motor 36, defining a motor axis of rotation 38, is mounted at a non-parallel angle relative to the axis of rotation 26 of the first driving axle shaft 24. The first electric motor 36 is shown mounted in a horizontal position such that the motor axis of rotation 38 is parallel to the vehicle floor 18 and is perpendicular to the axis of rotation 26 of the first driving axle shaft 24.

As shown in Figure 2A, drive unit assembly 20 further includes a second unit 23 comprising a second driving axle shaft 24, a second wheel hub 28, a second gear set 30, and a second electric motor 36. It is understood that the second unit 23 is a mirror image of the first unit 22. A beam 58 provides a fixed housing extending between the first 22 and second 23 units.

The first 36 and second 36 electric motors can be mounted in various different positions relative to each other. As shown in Figure 2A, the first 36 and second 36 electric motors can be mounted in a generally horizontal position with both electric motors 36 extending forwardly from the beam 58. Where packaging would allow, the electric motors 36 can also be mounted such that they both extend rearwardly from the beam 58. As shown in Figure 2B, the first 36 and second 36 electric motors can be mounted in a generally horizontal position with the first electric motor 36 extending in a forwardly direction relative to beam 58 while the second electric motor 36 extends in a rearwardly direction relative to beam 58. Arranging the configuration so that one electric motor 36 extends forwardly while the other electric motor 36 extends rearwardly can resolve electric motor weight balance issues that arise when both motors extend in the same direction from the beam 58.

As can be seen in Figure 3 and 4, a first gear box 40 houses the first gear set 30 and is rigidly connected to the first electric motor 36. A motor drive shaft 42 extends from the electric motor 36, along the motor axis of rotation 38, and drives the pinion gear 32. The pinion gear 32 meshes with the ring gear 34 which revolves about the axis 26 of the driving axle shaft 24. As the ring gear 34 rotates, it drives the driving axle shaft 24 which turns the wheel hub 28. As can be seen in Figure 4, gear box 40 is fixed to beam 58.

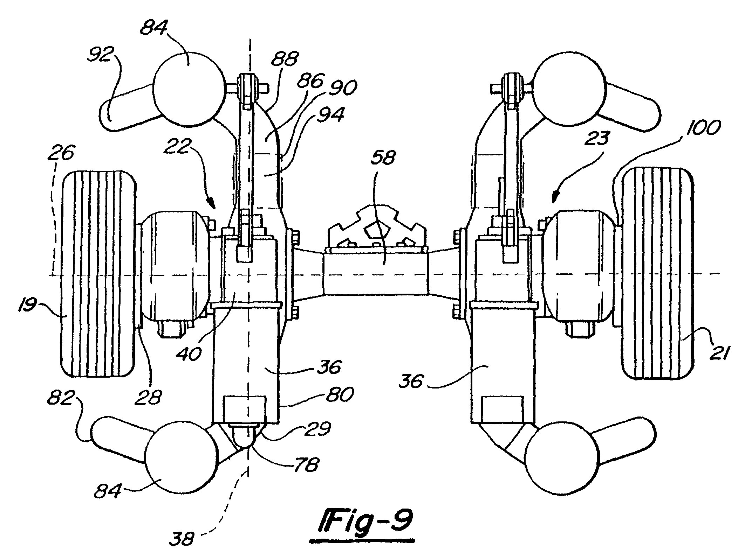

A planetary gear set, shown generally at 46 in Figure 4, can be used to achieve greater overall gear reduction. The planetary gear set 46 can either be located adjacent to the wheel hub 28 or can be incorporated into the gear box 40. The planetary gear set 46 shown in Figure 4 is located adjacent to the first wheel hub 28 and is driven by the first driving axle shaft 24. The planetary gear set 46 shown in Figure 8 is incorporated into the gear box 40. Regardless of its location, the planetary gear set 46 includes a sun gear 48, planet gears 50, and a ring gear hub 52. Each planet gear 50 is attached to a single planetary spider 53 by a corresponding planet pin 51, thus forming a planet gear assembly, as shown in the enlarged view of the planetary gear set 46 in Figure 8. The planet gear assembly is inserted into the ring gear hub 52 such that the teeth of the planet gears 50 mesh with the teeth of the ring gear hub 52.

In a typical configuration there are three planet gears 50 in a planet gear assembly but it is understood that a different number of planet gears 50 can be used. When the planetary gear set 46 is located adjacent to the wheel hub 28, as shown in Figure 4, the sun gear 48 is attached to and driven by the first driving axle shaft 24. As the sun gear 48 rotates, it meshes simultaneously with each of the planet gears 50 in the planet gear assembly. The planet gears 50 mesh with the ring gear hub 52 which results in the turning of the first wheel hub 28. In Figure 4, the entire planetary gear set 46 is shown housed within a planetary hub 54 located adjacent to the first wheel hub 28. It is understood that the drive unit assembly 20 does not require a planetary gear set 46 for operation. The planetary gear set 46 is an optional feature of the drive unit assembly 20.

As shown in Figure 8, the planetary gear set 46 can also be incorporated into the gear box 40 instead of being located adjacent to the wheel hub 28. Incorporating the planetary gear set 46 into the gear box 40 is a unique location for the planetary gear set 46. Typically, this location has been used by a differential which includes a ring gear and a pinion gear which drive axle shafts which in turn drive the wheels. With independent electric motors 36 there is no need for a differential or for any direct mechanical link between opposing wheels. By incorporating the planetary gear set 46 into the gear box 40, the need for a planetary hub 54 is eliminated which decreases the vehicle weight, gives a broader selection of wheel equipment and wheel end features, and reduces overall cost.

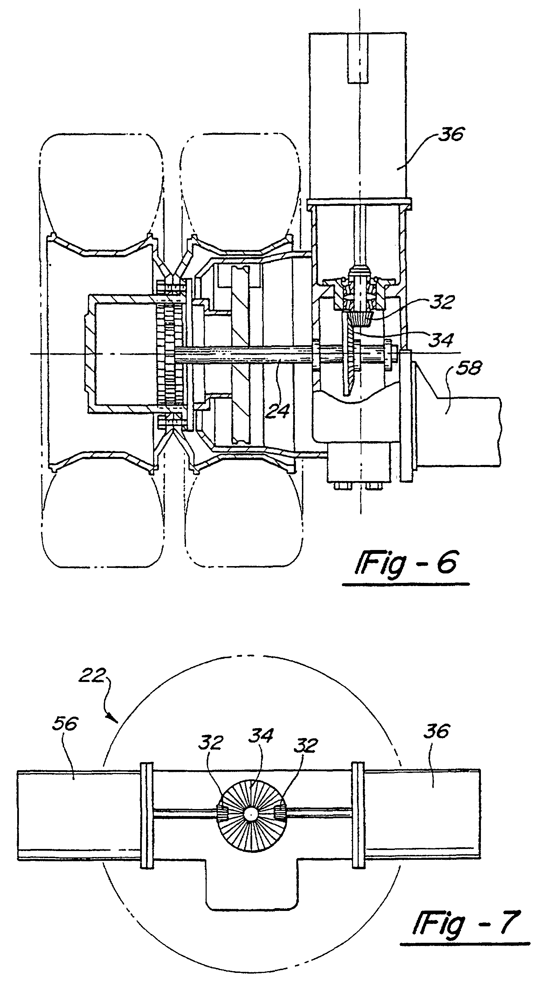

Figure 5 and 6 show an alternate embodiment of the mounting arrangement for the first electric motor 36. The first electric motor 36 is shown mounted in a vertical position such that the motor axis of rotation 38 is perpendicular to the vehicle floor 18 and is perpendicular to the axis of rotation 26 of the first driving axle shaft 24. In a typical configuration, the first electric motor 36 is mounted either in a horizontal or vertical position. However, the electric motor 36 can be mounted at any angle with respect to the vehicle floor 18 and the axis of rotation 26 of the first driving axle shaft 24.

Figure 7 shows an alternate embodiment of the drive unit assembly 20 in which the first unit 22 includes a third electric motor 56, in parallel driving relationship with the first electric motor 36. The third electric motor 56 is also used to drive the first gear set 30. The second unit 23 is a mirror image of the first unit 22 and includes a fourth electric motor 56, in parallel driving relationship with the second electric motor 36. The fourth electric motor 56 is use to drive the second gear set 30. The use of a third 56 and fourth electric motor 56, where packaging space is available, allows smaller gears and motors to be used, thus reducing the necessary size for the system.

With the present invention, the benefits as shown in particular in Figure 1 are achieved. By mounting the motors at the sides of the vehicle, the center of the vehicle floor may be lowered significantly than compared to the prior art. In addition, since the motors themselves are connected to drive the wheels to a non-parallel angle, they do not extend towards the center of the vehicle from the wheel for any undue amount. Thus, the lower floor can begin at a laterally outer position. If the motors extended on an axis parallel to the axis of the wheel, the motor would require a higher floor for more of the lateral width of the vehicle.

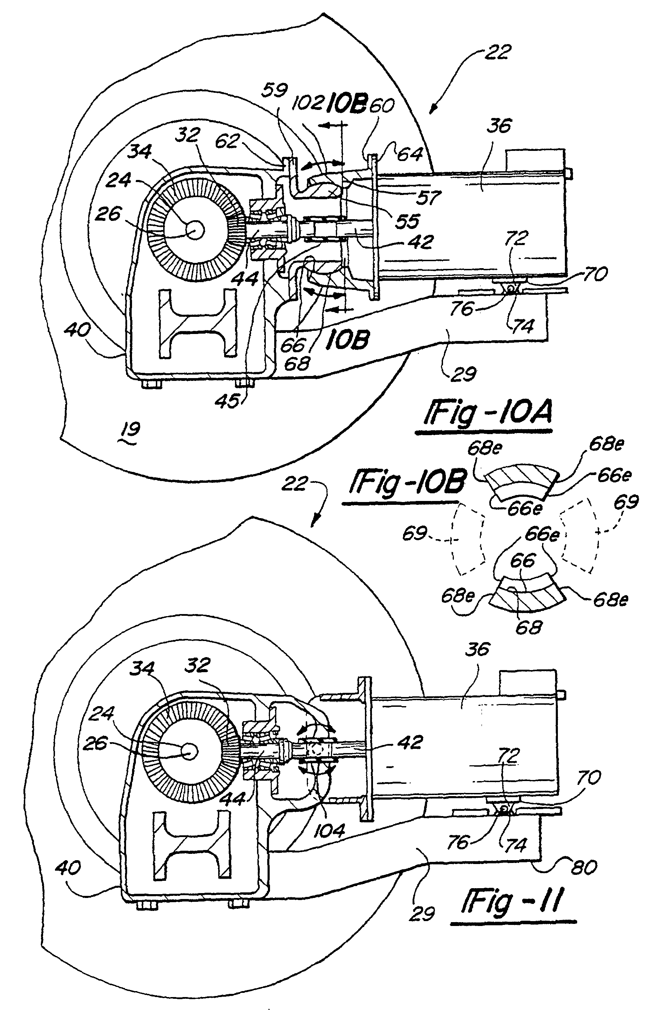

A preferred method of mounting the motors 36 to the vehicle is shown in Figure 9. The first 22 and second 23 vehicle suspension drive unit assemblies drive the wheels 19, 21 about the axis of rotation 26. As shown in Figure 10A, axis 26 is parallel to driving axle shaft 24 for the wheel 19 and extends through the center of the driving axle shaft 24 . The driving axle shaft 24 drives a first wheel hub 28 which revolves about the axis 26 of the driving axle shaft 24.

A first suspension beam 29 extends transversely to the axis 26 of the driving axle shaft 24 and adjacent to the first wheel hub 28. As is known, suspension beams are utilized to interconnect a fixed wheel axle housing and brake assembly to suspension elements such as air springs. The first suspension beam 29 supports the electric motor 36 which generates the torque to drive the driving axle shaft 24. As shown in Figure 9, electric motor 36 defines the motor axis of rotation 38 which is transverse to the axis of rotation 26 of the driving axle shaft 24.

A gear box or gear housing 40 interconnects the electric motor 36 and the driving axle shaft 24 and includes a pinion gear 32 and ring gear 34, shown in Figure 10A. The motor drive shaft 42 extends from the electric motor 36, along the axis 38 defined by the electric motor 36, and is coupled to a coaxial pinion shaft 44 which drives the pinion gear 32. The pinion gear 32 meshes with the ring gear 34 which revolves about the axis 26 of the driving axle shaft 24. As the ring gear 34 rotates, it drives the driving axle shaft 24 which turns the wheel hub 28.

The motor drive shaft 42 is connected to pinion shaft 44 by a flexible coupling. As the vehicle 10 receives road load input, the suspension beam 29 will move and flex. The flexible coupling can include a flexible tube portion 45 made of known materials.

As shown in Figure 10A, the flexible coupling can also be a spherical joint 102. The spherical joint 102 comprises a inner portion 55 and an outer portion 57. The inner portion 55 has an inner flange 59 and the outer portion 57 has an outer flange 60. The inner flange 59 is joined to a gear box flange 62 and the outer flange 60 is joined to an electric motor flange 64. The inner portion 55 of the spherical joint 102 has a concave surface 66 which rotatably mates with a convex surface 68 of the outer portion 57. Therefore, the electric motor 36, attached to the outer portion 57 of the spherical joint 102, can pivot with respect to the gear box 40 which is attached to the inner portion 55 of the spherical joint 102. The center of the spherical joint 102 coincides with the center of the flexible coupling.

As shown in Figure 10B, the inner portion 55 and outer portion 57 of the spherical joint 102 do not extend about 360 degrees about a central axis. Instead, edges such as shown at 66E and 68E are cutoff from each of the members. In this way, the members may be easily assembled. When the inner portion 55 is moved into the outer portion 57, the outer portion 57 is moved to the position shown in phantom at 69. The outer portion is then turned to reach the assembled position such as shown in Figure 10A.

The flexible coupling could alternatively be a universal joint or Oldham joint 104, as shown in Figure 4 as a black box to simplify the overall figure. It should be understood, that known universal joint couplings including two yokes that are driven for rotation with each other, but which may pivot relative to each other about three axes, would be preferably utilized in this embodiment.

For both embodiments, a moveable connection 70 interconnects the electric motor 36 and the first suspension beam 29 at a position spaced apart from the flexible coupling which interconnects the motor drive shaft 42 and the pinion shaft 44. Connection 70 can also be of various forms. A preferred connection 70 includes an electric motor mount 72 and a suspension beam mount 74 that are pivotally connected by a pivot pin 76. As the first suspension beam 29 moves up and down in response to road load input, the axis 38 of the electric motor 36 pivots relative to the first suspension beam 29.

As shown in Figures 9 and 10A, suspension beam 29 forms a C-shaped extension 78 which has a first end 80 and a second end 82. The suspension beam mount 74 that interconnects with the motor mount 72 to form the connection 70 is mounted adjacent end 80 and near the C-shaped extension 78. A second suspension beam 86 extending in the opposite direction from the first suspension beam 29 also forms a C-shaped extension 88 with a first end 90 and a second end 92. A counterweight 94 is disposed near the first end 90 of the second suspension beam 86. The counterweight 94 compensates for weight imbalance resulting from the electric motor 36 being supported by the first suspension beam 29 in a location extending to one side of the axis 26 of the driving axle shaft 24. Without a counterweight 94, the weight imbalance could become evident when vehicle 10 experiences vertical accelerations due to road bumps, rail road tracks, etc. The counterweight 94 can be focused or spread over the length of the second suspension beam 86, and can be cast in place, added later by attaching a weight, or by pouring molten lead into a cavity (not shown) in the second suspension beam 86. Located near the second ends 82, 92 of the C-shaped extensions 78, 88 are circular pads 84 for mounting resilient suspension means (not shown) between the vehicle 10 and the first 29 and second 86 suspension beams. Typically air springs are mounted on pads 84.

The second suspension drive unit assembly, generally shown at 23, consisting of the same or similar components as the first suspension drive unit assembly 22 is interconnected to the first suspension drive unit assembly 22 by the support beam 58. The second suspension drive unit assembly 23 drives a second wheel hub 100, located opposite of the first wheel hub 28 but which also revolves about the axis 26 of the driving axle shaft 24. Packaging advantages exist if the electric motors 36 of the first 22 and second 23 suspension drive unit assemblies extend in the same direction from the support beam 58.

Another mounting method is shown in Figure 12. The motor 36 for driving wheel 19 is connected to the gear box or housing 40. The gear housing 40 may be a portion of the axle housing for the wheel 19. The ring gear or bevel gear 34 is shown for driving wheel 19. Ring gear 34 is preferably associated with appropriate gearing to drive wheel 19.

As shown, the gear housing 40 includes an open end 106. Open end 106 is closed by the attachment of motor 36. As shown, bolts 108 attach the gear housing flange 62 to the electric motor flange 64. Also, the drive pinion gear 32 engages and drives the ring gear 34. The pinion shaft 44 for the pinion gear 32 receives drive rotation from the motor output shaft 42. The shafts 42, 44 are interconnected by a flexible coupling 43.

As shown, the gear housing 40 incorporates an opposed mounting portion 110 at a side of a central drive axis X of rotation opposed from the mounting of the motor 36. As shown in greater detail in Figure 13, the mounting portion 110 includes a first bearing assembly 112 which mounts a shaft portion 114 for the pinion gear 32 and a second bearing assembly 116 which mounts the pinion shaft 44 for the pinion gear 32. It should be understood that the first 112 and second 116 bearing assemblies include at least one bearing, but a greater number of bearings can also be used. As shown in Figures 12 and 13, the first bearing assembly 112 includes three angular contact bearings and the second bearing assembly 116 includes a single bearing. It is necessary for pinion gear 32 to be adequately supported on bearings such that it is able to transmit sufficient torque to rotate wheel 19.

In this embodiment, the positioning of bearings on an opposed side of the axis X from motor 36 results in a smaller overall envelope required for the entire system shown in Figure 12. As shown, the bearings 112 are mounted in a bearing housing 118 having bearing support portions 120. Bearing housing 118 encloses an open end 122 of gear housing 40.

In order to assemble the opposed mounting portion 110 into the gear housing 40, the bearing housing 118 is inserted into the open end 122 of gear housing 40 such that the pinion gear 32 teeth and the ring gear 34 teeth do not mesh. After initial positioning of the opposed mounting portion 110, the bearing housing 118 is moved horizontally such that a flange portion 124 of the bearing housing 118 encloses the open end 122 of the gear housing 40 resulting in the meshing of pinion gear 32 teeth with ring gear 34 teeth.

With this embodiment, the electric motor 36 is mounted on one side of the gear housing 40, and drives the pinion gear 32, which is mounted on one side of the axis X. The positioning of the bearings 112 on the opposed side of the axis X from the motor 36 results in an envelope Y which does not extend far beyond the size required for wheel 19. The floor 18 of the vehicle 10 must rise to accommodate wheel 19, and must also extend longitudinally slightly forwardly and rearwardly from the wheel 19. Thus, by the inventive positioning of a good deal of the bearings, etc., for the gears and motors 36 withing the longitudinal envelope of the wheel 19, this embodiment does not require the floor 8 to move upwardly to cover the motor 36 and gearing by any significant longitudinal amount.

It should also be understood that s similar coupling is mounted at the opposed lateral side of the vehicle 10 and would drive its own wheel 21.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that within the scope of the appended claims, wherein reference numerals are merely for convenience and are not to be in any way limiting, the invention may be practiced otherwise than as specifically described.

## Claims

1. A transmission assembly for driving a vehicle wheel comprising:
a wheel hub (28) carrying a wheel having a transversely extending drive axis;
a driven gear (34) mounted for rotation about said drive axis and connected with a driving axle shaft (24) driving said wheel hub (28);
a drive gear (32) mounted at 90 degrees relative to said drive axis for rotation about a longitudinal axis, said drive gear (32) meshing with said driven gear (34) such that rotation of said drive gear about said longitudinal axis causes resultant rotation of said driven gear (34) about said drive axis of said wheel; and
an electric motor (36) having a motor drive shaft (42) mounted for rotation about said longitudinal axis and operatively connected to drive said drive gear (32),
**characterized in that** said electric motor (36) is mounted on one longitudinal side of said drive axis and said drive gear (32) is mounted on an opposed side of said drive axis.

2. An assembly as recited in claim 1 wherein said drive gear (32) is mounted within bearings (112, 116) mounted in a housing (40) on one longitudinal side of said drive axis and said electric motor (36) is connected to said housing on an opposed side of said drive axis.

3. An assembly as recited in claim 1 wherein said drive gear (32) is supported on a gear drive shaft (44) that extends from said drive gear (32) toward said electric motor (36), said gear drive shaft (44) being positioned on an opposed side of said drive gear (32) from said motor drive shaft (42), said gear drive shaft (44) being received in bearings (112, 116) mounted in a housing (40).

4. An assembly as recited in claim 1 wherein said drive (32) and driven (34) gears are mounted within a gear housing (40) having an opening at one end, said electric motor (36) being mounted to said housing (40) to close said opening.

5. An assembly as recited in claim 1 including at least one bearing (112, 116) mounted on one side of said drive gear (32) opposed to said drive axis, said drive gear (32) having a bearing shaft (54) mounted with said bearing (112, 116) for rotation about said longitudinal axis.

6. An assembly as recited in claim 1 including a flexible coupling (43) connecting said motor drive shaft (42) to a gear drive shaft (44) that supports said drive gear (32), said motor drive shaft (42) and said gear drive shaft (44) being mounted for rotation about said longitudinal axis.

7. A transmission for driving a single vehicle wheel comprising:
a wheel hub (28) carrying a wheel having a transversely extending drive axis;
a driven bevel gear (34) mounted for rotation about said drive axis and operatively connected to drive said wheel hub (28);
a drive pinion gear (32) mounted at 90 degrees relative to said drive axis for rotation about a longitudinal axis, said drive pinion gear (32) meshing with said driven pinion gear (34) such that rotation of said drive gear (32) about said longitudinal axis causes resultant rotation of said driven bevel gear (34) about said drive axis of said wheel; and
a bearing (112, 116), said drive pinion gear (32) having a bearing shaft (54) mounted within said bearing (112,116) for rotation about said longitudinal axis; and
an electric motor (36) having a motor drive shaft (42) connected to a flexible coupling (42), said flexible coupling (43) connected to a gear drive shaft (44) for driving said drive pinion gear (32) wherein said motor drive shaft (42), said bearing shaft (54), and said gear drive shaft (44) are all mounted for rotation about said longitudinal axis,
**characterized in that** said bearing (112, 116) is mounted on one longitudinal side of said drive pinion gear (32) opposed to said drive axis and said electric motor (36) is mounted on an opposed side of said drive axis from said drive pinion gear (32).

## Patentansprüche

1. Getriebeanordnung zum Antreiben eines Fahrzeugrades mit:
einer Radnabe (28), die ein Rad mit einer sich quer erstreckenden Antriebsachse trägt;
einem Abtriebszahnrad (34), das so angebracht ist, daß es sich um die Antriebsachse dreht, und mit einer Antriebsachswelle (24) verbunden ist, die die Radnabe (28) antreibt;
einem Antriebszahnrad (32), das in einem Winkel von 90° zu der Antriebsachse so angebracht ist, daß es sich um eine Längsachse dreht, wobei das Antriebszahnrad (32) so mit dem Abtriebszahnrad (34) in Eingriff steht, daß eine Drehung des Antriebszahnrads um die Längsachse bewirkt, daß eine Drehung des Abtriebszahnrads (34) um die Antriebsachse des Rades hervorgerufen wird; und
einem Elektromotor (36) mit einer Motorantriebswelle (42), die so angebracht ist, daß sie sich um die Längsachse dreht, und die funktional so verbunden ist, daß sie das Antriebszahnrad (32) antreibt,
**dadurch gekennzeichnet, daß** der Elektromotor (36) auf einer Längsseite der Antriebsachse angebracht ist und das Antriebszahnrad (32) auf einer entgegengesetzten Seite der Antriebsachse angebracht ist.

2. Anordnung nach Anspruch 1, bei der das Antriebszahnrad (32) in Lagern (112, 116) angebracht ist, die in einem Gehäuse (40) auf einer Längsseite der Antriebsachse angebracht sind, und der Elektromotor (36) auf einer entgegengesetzten Seite der Antriebsachse mit dem Gehäuse verbunden ist.

3. Anordnung nach Anspruch 1, bei der das Antriebszahnrad (32) auf einer Zahnradantriebswelle (44) gelagert ist, die sich von dem Antriebszahnrad (32) in Richtung zu dem Elektromotor (36) erstreckt, wobei die Zahnradantriebswelle (44) auf einer zur Motorantriebswelle (42) entgegengesetzten Seite des Antriebszahnrads (32) positioniert ist, wobei die Zahnradantriebswelle (44) in in einem Gehäuse (40) angebrachten Lagern (112, 116) aufgenommen ist.

4. Anordnung nach Anspruch 1, bei der das Antriebs- (32) und das Abtriebszahnrad (34) in einem Zahnradgehäuse (40) angebracht sind, das an einem Ende eine Öffnung aufweist, wobei der Elektromotor (36) an dem Gehäuse (40) angebracht ist und die Öffnung verschließt.

5. Anordnung nach Anspruch 1, die wenigstens ein Lager (112, 116) umfaßt, das auf einer zur Antriebsachse entgegengesetzten Seite des Antriebszahnrads (32) angebracht ist, wobei das Antriebszahnrad (32) eine Lagerwelle (54) aufweist, die mit dem Lager (112, 116) so angebracht ist, daß sie sich um die Längsachse dreht.

6. Anordnung nach Anspruch 1, die eine flexible Kupplung (43) umfaßt, die die Motorantriebswelle (42) mit einer Zahnradantriebswelle (44) verbindet, auf der das Antriebszahnrad (32) gelagert ist, wobei die Motorantriebswelle (42) und die Zahnradantriebswelle (44) so angebracht sind, daß sie sich um die Längsachse drehen.

7. Getriebe zum Antreiben eines einzelnen Fahrzeugrades mit:
einer Radnabe (28), die ein Rad mit einer sich quer erstreckenden Antriebsachse trägt;
einem Abtriebskegelrad (34), das so angebracht ist, daß es sich um die Antriebsachse dreht, und funktional so verbunden ist, daß es die Radnabe (28) antreibt;
einem Antriebsritzel (32), das in einem Winkel von 90° zu der Antriebsachse so angebracht ist, daß es sich um eine Längsachse dreht, wobei das Antriebsritzel (32) so mit dem Abtriebskegelrad (34) in Eingriff steht, daß eine Drehung des Antriebszahnrads (32) um die Längsachse bewirkt, daß eine Drehung des Abtriebskegelrads (34) um die Antriebsachse des Rades hervorgerufen wird; und
einem Lager (112, 116), wobei das Antriebsritzel (32) eine Lagerwelle (54) umfaßt, die in dem Lager (112, 116) so angebracht ist, daß sie sich um die Längsachse dreht; und
einem Elektromotor (36) mit einer Motorantriebswelle (42), die mit einer flexiblen Kupplung (43) verbunden ist, wobei die flexible Kupplung (43) zum Antreiben des Antriebsritzels (32) mit einer Zahnradantriebswelle (44) verbunden ist, wobei die Motorantriebswelle (42), die Lagerwelle (54) und die Zahnradantriebswelle (44) alle so angebracht sind, daß sie sich um die Längsachse drehen,
**dadurch gekennzeichnet, daß** das Lager (112, 116) auf einer zur Antriebsachse entgegengesetzten Längsseite des Antriebsritzels (32) angebracht ist und der Elektromotor (36) auf einer zum Antriebsritzel (32) entgegengesetzten Seite der Antriebsachse angebracht ist.

## Revendications

1. Un ensemble de transmission pour entraîner une roue de véhicule comprenant :
- un moyeu de roue (28) portant une roue pourvue d'un axe d'entraînement s'étendant transversalement ;
- un pignon mené (34) monté de manière à tourner autour dudit axe d'entraînement et relié à un arbre de roue motrice (24) entraînant ledit moyeu de roue (28) ;
- un pignon menant (32) monté à 90 degrés par rapport au dit axe d'entraînement de manière à tourner autour d'un axe longitudinal, ledit pignon menant (32) se mettant en prise avec ledit pignon mené (34) de telle sorte que la rotation dudit pignon menant autour dudit axe longitudinal provoque la rotation consécutive dudit pignon mené (34) autour dudit axe d'entraînement de ladite roue ; et
- un moteur électrique (36) comprenant un arbre d'entraînement moteur (42) monté de manière à tourner autour dudit axe longitudinal et relié de façon opérationnelle pour entraîner ledit pignon menant (32),
**caractérisé en ce que** ledit moteur électrique (36) est monté sur un côté longitudinal dudit axe d'entraînement et **en ce que** ledit pignon menant (32) est monté sur un côté opposé dudit axe d'entraînement.

2. Un ensemble selon la revendication 1 dans lequel ledit pignon menant (32) est monté à l'intérieur de paliers (112, 116) montés dans un carter (40) sur un côté longitudinal dudit axe d'entraînement et ledit moteur électrique (36) est relié au dit carter sur un côté opposé dudit axe d'entraînement.

3. Un ensemble selon la revendication 1 dans lequel ledit pignon menant (32) est soutenu sur un arbre de transmission à engrenages (44) qui s'étend à partir dudit pignon menant (32) vers ledit moteur électrique (36), ledit arbre de transmission à engrenages (44) étant placé sur un côté opposé dudit pignon menant (32) à partir dudit arbre d'entraînement moteur (42), ledit arbre de transmission à engrenages (44) étant guidé dans des paliers (112, 116) montés dans un carter (40).

4. Un ensemble selon la revendication 1 dans lequel lesdits pignons menant (32) et mené (34) sont montés à l'intérieur d'un carter d'engrenages (40) pourvu d'une ouverture à une extrémité, ledit moteur électrique (36) étant monté sur ledit carter (40) pour fermer ladite ouverture.

5. Un ensemble selon la revendication 1 comprenant au moins un palier (112, 116) monté sur un côté dudit pignon menant (32) à l'opposé dudit axe d'entraînement, ledit pignon menant (32) ayant un arbre de palier (54) monté avec ledit palier (112, 116) de manière à tourner autour dudit axe longitudinal.

6. Un ensemble selon la revendication 1 comprenant un accouplement flexible (43) reliant ledit arbre d'entraînement moteur (42) au dit arbre de transmission à engrenages (44) qui soutient ledit pignon menant (32), ledit arbre d'entraînement moteur (42) et ledit arbre de transmission à engrenages (44) étant montés de manière à tourner autour dudit axe longitudinal.

7. Un ensemble de transmission pour entraîner une unique roue de véhicule comprenant :
- un moyeu de roue (28) portant une roue pourvue d'un axe d'entraînement s'étendant transversalement ;
- un pignon conique mené (34), monté de manière à tourner autour dudit axe d'entraînement et relié de façon opérationnelle pour entraîner ledit moyeu de roue (28) ;
- un pignon menant (32) monté à 90 degrés par rapport au dit axe d'entraînement de manière à tourner autour d'un axe longitudinal, ledit pignon menant (32) se mettant en prise avec ledit pignon mené (34) de telle sorte que la rotation dudit pignon menant autour dudit axe longitudinal provoque la rotation consécutive dudit pignon conique mené (34) autour dudit axe d'entraînement de ladite roue ;
- un palier (112, 116), ledit pignon menant (32) ayant un arbre de portée (54) monté à l'intérieur dudit palier (112, 116) de manière à tourner autour dudit axe longitudinal ; et
- un moteur électrique (36) pourvu d'un arbre d'entraînement moteur (42) relié à un accouplement flexible (43), ledit accouplement flexible (43) étant relié à un arbre de transmission à engrenages (44) pour entraîner ledit pignon menant (32), dans lequel ledit arbre d'entraînement moteur (42), ledit arbre de portée (54) et ledit arbre de transmission à engrenages (44) sont tous montés de manière à tourner autour dudit axe longitudinal,
**caractérisé en ce que** ledit palier (112, 116) est monté sur un côté longitudinal dudit pignon menant (32) à l'opposé dudit axe d'entraînement et **en ce que** ledit moteur électrique (36) est monté sur un côté opposé dudit axe d'entraînement à partir dudit pignon menant (32).
